# EUROPÄISCHE PATENTSCHRIFT

(11) **EP 1 612 578 B1**
(45) Veröffentlichungstag und Bekanntmachung des Hinweises auf die Patenterteilung: **15.07.2009**
(21) Anmeldenummer: 05021231.5
(22) Anmeldetag: 09.03.2004
(51) Int. Cl.: G01S 13/04, G01S 13/06, G01S 13/34, G01S 17/02, H01Q 3/30, H01Q 1/38, H01Q 21/06, H01Q 23/00, E05F 15/14, E05F 15/20, G01S 7/40, H01Q 3/26

(54) **Verfahren zum Betreiben eines Radarsensors**
Method of operating a radar sensor
Procédé de fonctionnement d'un radar

(30) Priorität: 19.08.2003 DE 10338536
(43) Veröffentlichungstag der Anmeldung: 04.01.2006
(62) Teilanmeldung aus: 04005531.1
(73) Patentinhaber: Bircher Reglomat AG, 9042 Speicher (CH)
(72) Erfinder: Mezger, Klaus, CH-9038 Rehetobel (CH); Audergon, Léon, 8404 Winterthur (CH)
(74) Vertreter: Weiss, Peter

(56) Entgegenhaltungen:
- WO-A-03/054333
- DE-A- 4 217 426
- DE-A- 10 012 115
- US-A- 5 294 934
- US-A- 5 867 123
- US-B1- 6 220 627
- US-B1- 6 366 237

## Beschreibung

Die Erfindung betrifft ein Verfahren zum Betreiben eines Radarsensors im Nahbereich zur Erzeugung eines detektierbaren Erfassungsfeldes für die Erkennung von Personen und/oder stationären Objekten mit einer Antenne.

Bei herkömmlichen Radarsensoren, denen meist auch stationäre Sensoren, Infrarotsender und -sensoren zugeordnet sind, ist das Erfassungsfeld zu aufwendig zu bestimmen und einzustellen. Soll das Erfassungsfeld geändert werden, so muss der Radarsensor manuell in seiner Lage, beispielsweise in der Wand, geneigt oder verändert werden.

Diese örtliche Veränderung des Radarsensors in seiner Lage, beispielsweise gegenüber einer Wand oder gegenüber einem bestimmten Gegenstand, ist sehr aufwendig und ungenau.

Insbesondere zur Bestimmung von stationären Hindernissen mit einer Distanz- und Phasenmessung kann ein Erfassungsfeld nicht immer sehr genau eingestellt werden, was unerwünscht ist.

Entsprechende Radarsensoren werden beispielsweise an automatischen Türen und Toren eingesetzt, die dem Öffnen und Schliessen von Türen und Toren dienen und gleichzeitig verhindern, dass Personen eingeklemmt oder verletzt werden. Die Sensoren können auf der Grundlage von passiv Infrarot, aktiv Infrarot, Ultraschall und Radar aufgebaut sein. Häufig werden auch Bewegungssensoren und Präsenzsensoren in einem Gerät kombiniert. Beispielsweise findet ein Radarbewegungssensor mit einem Aktiv-Infrarotpräsenzsensor häufig Anwendung.

Nachteilig ist hieran, dass das Erfassungsfeld manuell bei der Installation an der Türe ausgerichtet und justiert werden muss. Das bedeutet, dass das Fachpersonal, beispielsweise mittels einer Leiter, zum Sensor aufsteigen und mittels Versuch durch Änderung der Neigung, beispielsweise mittels eines aufwendigen Verstellmechanismusses, eine Schräglage des Sensors zur Beeinflussung des Erfassungsfeldes neu einstellen muss.

Dabei sind häufig Sensor und Auswerteelektronik im Gehäuse voneinander getrennt, was eine zusätzliche separate Halterung und weitere Stecker etc. voraussetzt.

Ferner ist nachteilig, dass herkömmliche Radarsensoren eine grosse Einbaugrösse und unerwünschte Einbautiefe erfordern und keine manuelle Einstellung bzw. Verstellung auf einfache Weise möglich ist. Zusätzlich können Infrarotsensoren vorgesehen sein, die durch Fremdlicht nachteilig beeinflussbar sind, so dass insbesondere bei Sonnenlicht die Sensoren nicht gleichmässig und kontinuierlich arbeiten. Ein weiterer Nachteil ist, dass herkömmliche Radarsensoren mit integrierten Infrarot-Präsenzsensoren aufgrund der Bodenbeschaffenheit und eines unterschiedlichen Reflektionsgrades des Bodens nicht überall eingesetzt werden können. Ein Reflektionsverhalten muss bei herkömmlichen Infrarot-Präsenzsensoren in den Sensor eingegeben bzw. abgeglichen werden, was unerwünscht ist. Das herkömmliche System muss über jedem Boden selbst justiert und ausgeregelt werden. Bei bestimmten Typen von Böden ist keine ausreichende Reflektion vorhanden, so dass herkömmliche Sensoren bzw. Radarsensoren nicht eingesetzt werden können. Insbesondere bei Ultraschallsensoren können Luftbewegungen den Prozess unerwünscht beeinflussen.

Bei den herkömmlichen passiven Infrarotsystemen ist nachteilig, dass diese nur über Wärmedifferenzen ansprechen und keine sicherheitsrelevante Anwendung gewährleisten.

Die DE 100 12 115 offenbart eine Sensoreinrichtung für automatische Türanlagen, die als Flächenstrahler ausgebildet ist.

Aus der US 5,294,934 ist eine Selbsttest-Einrichtung für Antennenarrays, insbesondere für die Satellitenfunktechnik beschrieben. Dort wird eine Hilfsantenne verwendet, die einen sog. Loop-Back-Test durchführt; hierzu wird ein sog. Test-Translator verwendet. Dabei strahlt der zu überprüfende Radarsensor ein definiertes Testsignal ab, welches dann von der Hilfsantenne im Test-Translator empfangen wird. Von der Hilfsantenne wird dieses Signal empfangen und datenverzögert zurückgesendet.

Die US 5,867,123 beschreibt ein Verfahren zum Durchführen von Selbsttests von Antennen-Arrays, die nach der sog. "Cluster-Search-Methode" arbeiten. Hier werden aufwendige Hilfsschaltungen verwendet, um einzelne Paare von Sende- und Empfänger-Antennenpads des gesamten zu testenden Arrays isoliert als Sende-Empfänger-Teststrecke einzuschalten. Hierzu ist eine sehr aufwendige HS-taugliche Umschaltmatrix für die Antennen des eigentlichen Radargeräte notwendig. Ferner benötigen derartige Tests sehr viel Zeit.

Die WO 03/054333 beschreibt ein Verfahren zum automatischen Öffnen und Schliessen von Türen unter Verwendung eines Öffners und Präsenzsensors. Dieser Sensor basiert auf drei physikalisch unterschiedlichen Prinzipien. Dabei wird der Präsenzsensor als reiner IR-Sensor ausgeführt. Zusätzlich wird eine Kamera verwendet. Eine Hilfsantenne zur Durchführung von Selbsttests wird hier nicht verwendet.

DE 42 17 426 A1 beschreibt einen Bewegungsmelder unter Verwendung eines Dvpplerradarsensors, welcher als planare Schaltung auf einem Substrat aufgebracht ist. Eine Hilfsantenne wird hier nicht verwendet.

Die US 6,220,627 B1 beschreibt ein System zum Erkennen einer Sitzposition eines Menschen in einem Fahrzeug, um bei Abweichung von einer bestimmten Sitzposition und Lage einen Airbag im Falle eines Unfalles auszuschalten.

In der US 6,366,237 B1 wird eine elektronische Verstelleinrichtung zur Veränderung eines Abstrahlwinkels einer Antennen-Richtkeule beschrieben. Die Winkelverstellung erfolgt durch eine geeignete Phasenansteuerung der Sende-Array-Antenne. Eine Hilfsantenne wird nicht verwendet.

Der vorliegenden Erfindung liegt die Aufgabe zugrunde, ein Verfahren sowie ein Radarsensor zur Durchführung des Verfahrens zu schaffen, welche die genannten Nachteile beseitigen und mit welchen auf einfach und kostengünstige Weise im Betrieb eine Betriebssicherheit überprüfbar ist. Zudem sollen Fertigungskosten, Montagekosten sowie auch Einstellkosten erheblich reduziert werden.

Zur Lösung dieser Aufgabe führen die Merkmale des Patentanspruches 1 sowie die Merkmale des nebengeordneten Patentanspruches 12.

Das bedeutet, dass durch den Energieentzug das Erfassungsfeld des Radarsensors belastet und hierdurch der Radarsensor auf Betriebssicherheit testbar ist. Die Hilfsantenne kann als autonome, eigenständige Hilfsantenne dem Radarsensor zur Überprüfung auf Betriebssicherheit zugeordnet und in gleichen oder anderen Frequenzen betreibbar sein.

Bei der vorliegenden Erfindung hat sich als vorteilhaft erwiesen, dass ein Radarsensor eine Mehrzahl von in einer Grundfläche vorgesehenen Slot-Antennen aufweist, um elektronisch ein Erfassungsfeld zu verändern. Dabei kann durch die Anzahl sowie durch die Anordnung der entsprechenden Slot-Antennen in der Grundfläche zueinander Einfluss auf das Erfassungsfeld genommen werden. Dabei kann die Erfassungsfeldeinstellung für einen bestimmten Typ beispielsweise mit einer Fernbedienung erfolgen, welche die Werte für einen bestimmten Typ abspeichert und auf den entsprechenden Radarsensor überträgt. Dabei werden in einem Grundkörper die Slot-Antennen, ein Präsenzsensor sowie die Auswerteelektronik und die Hilfsantenne integriert eingesetzt, wobei beispielsweise auf einer Rückseite des Grundkörpers die Elektronik vorgesehen ist.

Dabei kann auch daran gedacht sein, dass durch beliebige Kombinationen von Präsenz- und Bewegungs-Sensormodulen mit gleichen Modulsystemen verschiedenste Türtypen und Einbausituationen abgedeckt bzw. kompensiert werden können.

Ferner ist von Vorteil bei der vorliegenden Erfindung, dass über den wählbaren Abstand A und/oder Abstand B zweier übereinander und/oder zweier nebeneinander angeordneter Slot-Antennen Einfluss auf die Grösse sowie die Position des erzeugten Erfassungsfeldes bzw. auf den Abstrahlwinkel a genommen werden kann. Hierdurch können insbesondere bewegte Objekte im erzeugten Dynamikfeld als Erfassungsfeld genau detektiert werden.

Wichtig ist auch, dass die Grösse sowie der Ort des Dynamikfeldes exakt bestimmt und ausgerichtet werden kann. Ferner kann dem Radarsensor, insbesondere einem dynamischen Radarsensor ein Präsenzsensor zugeordnet sein. Jedoch soll auch im Rahmen der vorliegenden Erfindung liegen, den Präsenzsensor eigenständig und unabhängig vom Radarsensor einzusetzen, um statische Objekte in einem Präsenzfeld zu erkennen.

Zusätzlich kann der Präsenzsensor in einer gewünschten Breite und Länge ausgerichtet sein und lässt, insbesondere durch Einsetzen eines Senders und eines Empfängers, durch insbesondere die Winkelbestimmung der phasenverschobenen Empfangssignale eine Lokalisierung und Bestimmung des Ortes und der Grösse des Objektes zu. Dies soll ebenfalls im Rahmen der vorliegenden Erfindung liegen.

Vorzugsweise ist der Präsenzsensor ein Radarsensor, insbesondere ein FMCW-Radarsensor, mit integrierter unabhängiger Hilfsantenne zur Durchführung von Selbsttests. Durch die Beeinflussung der Nutzfeldenergie wird ein identifizierbares Ausgangssignal an der Empfangsantenne erzeugt. Dadurch kann der gesamte Signalpfad inkl. Antennen innerhalb des Sensorsystems überprüft werden.

Von Vorteil ist bei der vorliegenden Erfindung, dass insbesondere durch die Ausbildung von unterschiedlichen Anordnungen von Slot-Antennen geeignete und wählbare Erfassungsfelder erzeugt werden können, die sich elektronisch beispielsweise mittels einer Fernsteuerung oder Fernbedienung noch verändern lassen. Die Slot-Antennen bilden im wesentlichen den Bewegungssensor bzw. Dynamiksensor, wobei der Präsenzsensor lediglich der Distanz und Phasenmessung zur Erkennung eines stationären Hindernisses dient. Dabei kann auch elektronisch und einstellbar die Position und Dimensionierung des Erfassungsfeldes auch über Fernbedienung erfolgen, wobei über die integrierte, unabhängige Hilfsantenne diese Selbsttests durchgeführt werden können.

Diese beiden Sensortypen, d.h. der Präsenzsensor sowie der Radarsensor können einzeln oder auch kombiniert in einem gemeinsamen Radarsensor bzw. Kombisensor untergebracht sein und ohne entsprechende mechanische Verstellmechanismen auf Türrahmen, Wände, vor entsprechenden Türen, Toren od. dgl. montiert werden. Dabei sind beliebige Kombinationen von Präsenz- und Bewegungssensoren bzw. Radarsensoren möglich. Dies soll ebenfalls im Rahmen der vorliegenden Erfindung liegen.

Weitere Vorteile, Merkmale und Einzelheiten der vorliegenden Erfindung ergeben sich aus der nachfolgenden Beschreibung bevorzugter Ausführungsbeispiele sowie anhand der Zeichnung; diese zeigt in
Figur 1a eine schematisch dargestellte Draufsicht auf einen erfindungsgemässen Radarsensor;
Figur 1b schematisch dargestellte Seitenansichten auf eine mögliche Gebrauchslage des Radarsensors gemäss Figur 1a;
Figuren 2a bis 4 jeweilige Draufsichten auf weitere Ausführungsbeispiele von weiteren Radarsensoren;

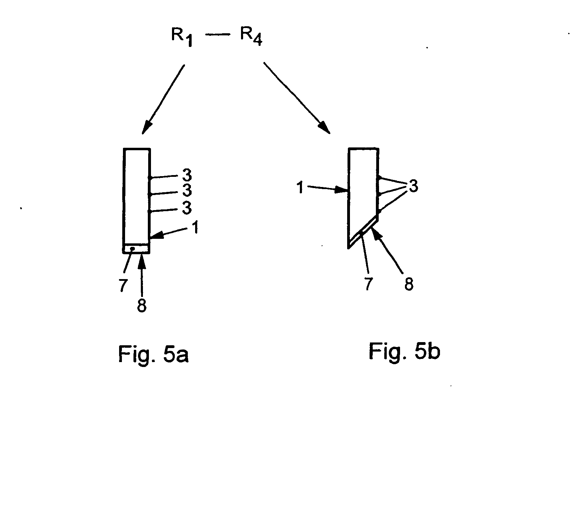

Figuren 5a und 5b weitere Ausführungsbeispiele der Radarsensoren gemäss den Figuren 2 bis 4 in den jeweiligen Seitenansichten.

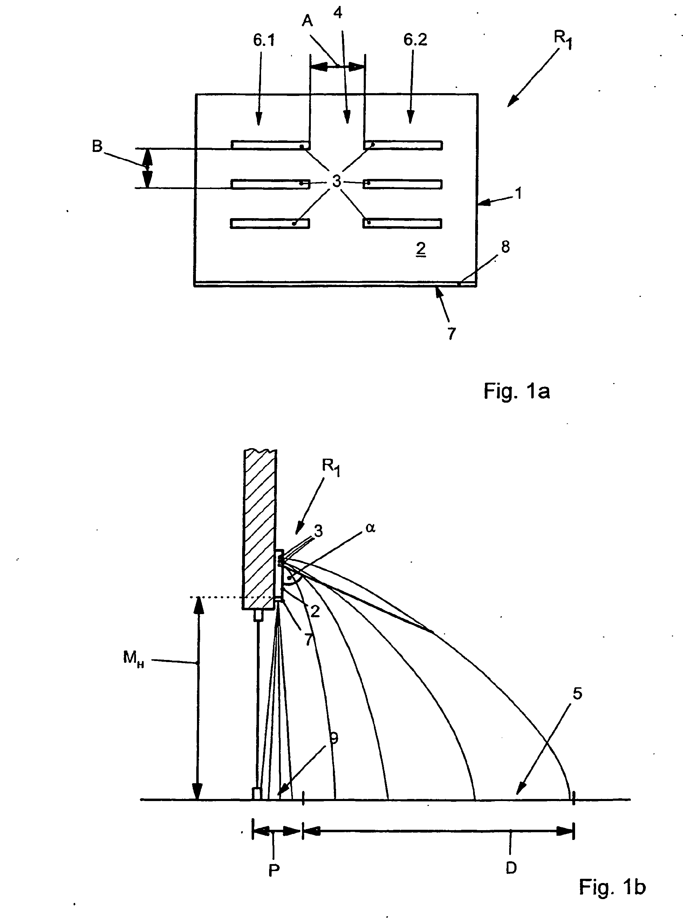

Gemäss Figur 1a besteht ein erfindungsgemässer Radarsensor R1 aus einem Grundkörper 1, welcher eine äussere Grundfläche 2 aufweist, die vorzugsweise aus Metall gebildet ist. In der Grundfläche 2 sind eine Mehrzahl von Antennen, insbesondere Slot-Antennen 3, vorgesehen bzw. aus der Grundfläche 2 gebildet. Die Slot-Antennen 3 sind vorzugsweise als Dielektrikum aus der Grundfläche 2 gebildet bzw. als Dielektrikum aus dieser ausgespart. Als Antennen 3 können beliebige Antennen unterschiedlichster Art und Ausführung verwendet werden. Vorzugsweise werden jedoch Slot-Antennen 3 verwendet.

Wichtig ist bei der vorliegenden Erfindung, dass eine Anordnung 4, gebildet aus den einzelnen Slot-Antennen 3, zentrisch in der Grundplatte 2 vorgesehen ist, so dass hierdurch eine bestimmte Wellenfront generierbar ist, die in einem Abstrahlwinkel a, siehe Figur 1b ein gewünschtes Erfassungsfeld 5 bzw. Dynamikfeld D erzeugt. Lediglich durch die unterschiedlich wählbaren bzw. zu dimensionierenden Abstände A und/oder B der Slot-Antennen 3 zueinander, die übereinander und nebeneinander angeordnet in der Grundplatte 2 vorgesehen sind, ist ein Abstrahlwinkel a zur Bestimmung und Lokalisierung des Erfassungsfeldes 5 beeinflussbar. Insbesondere durch die Veränderung des Abstandes A und/oder B der beiden Slot-Antennen 3 zueinander lässt sich der Abstrahlwinkel a beeinflussen bzw. eine Breite und Grösse des Erfassungsfeldes 5 an einem gewünschten Ort bestimmen. Auf diese Weise kann in Abhängigkeit einer bestimmten Montagehöhe MH ein Radarsensor R1 geschaffen werden, welcher für jeden Einbauort spezifisch hergestellt werden kann. Über eine entsprechende Phasenverschiebung kann eine Feinjustierung des Erfassungsfeldes auch ggf. ferngesteuert vorgenommen werden.

Wichtig ist ferner, dass sich Abstrahlwinkel a und Feldgrösse durch die elektronische Steuerung der abgestrahlten Energien einzelner Antennenelemente, insbesondere Slot-Antennen 3, beeinflussen und verändern lassen. Ferner lässt die Gewinnung und die Auswertung der Phaseninformation, d.h. Auswertung von Frequenz und Phase, eine elektronische Justiermöglichkeiten zu, indem ein Schwenken und ein Feldbegrenzen des Erfassungsfeldes elektronisch erfolgen kann. Daher kann auch Einfluss auf sich ändernde Montagehöhen MH im Radarsensors R1 genommen werden.

Dabei können mehrere Slot-Antennen 3 übereinander und auch mehrere Slot-Antennen 3 nebeneinander, vorzugsweise auf gleicher Höhe, in der Grundfläche 2 des Radarsensors R1 vorgesehen sein.

Vorzugsweise ist eine erste Anordnung 6.1 aus drei übereinander und parallel zueinander angeordneten Slot-Antennen 3 gebildet, wobei daneben beabstandet eine zweite Anordnung von nahezu identischen Slot-Antennen 3 gebildet ist. Dabei liegen die jeweiligen benachbarten Slot-Antennen 3 der Anordnung 6.1, 6.2 auf gleicher Höhe.

Hierdurch können von der ersten Anordnung 6.1 und zweiten Anordnung 6.2 von Slot-Antennen 3 entsprechende Wellenfronten, die sich überlagern, zur Erzeugung eines Erfassungsfeldes erzeugt werden.

Sind andere Felder oder Winkel gewünscht, so sind auch andere Anordnungen 6.1, 6.2 von Slot-Antennen 3 in unterschiedlichen Abständen A und/oder B zueinander denkbar.

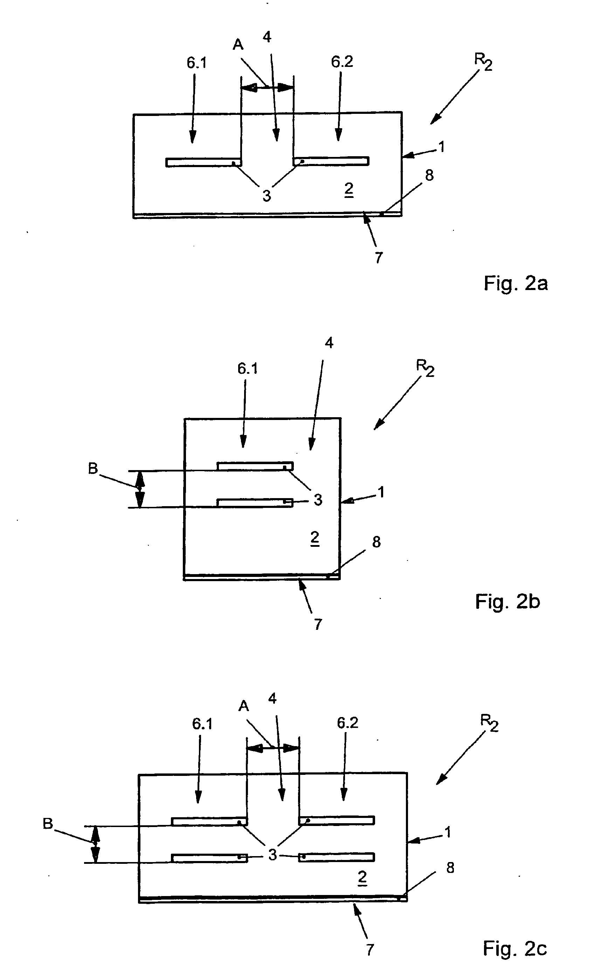

In den Figuren 2a bis 2c ist ein Sensor R2 aufgezeigt, bei welchem zwei oder vier Slot-Antennen 3 vorgesehen sind, wobei jeweils zwei übereinander und zwei nebeneinander in den Anordnungen 6.1, 6.2 in der Grundplatte 2 ausgerichtet sind. Hierüber lässt sich ebenfalls Einfluss nehmen auf die Grösse sowie den Abstrahlwinkel a des Empfangsfeldes 5.

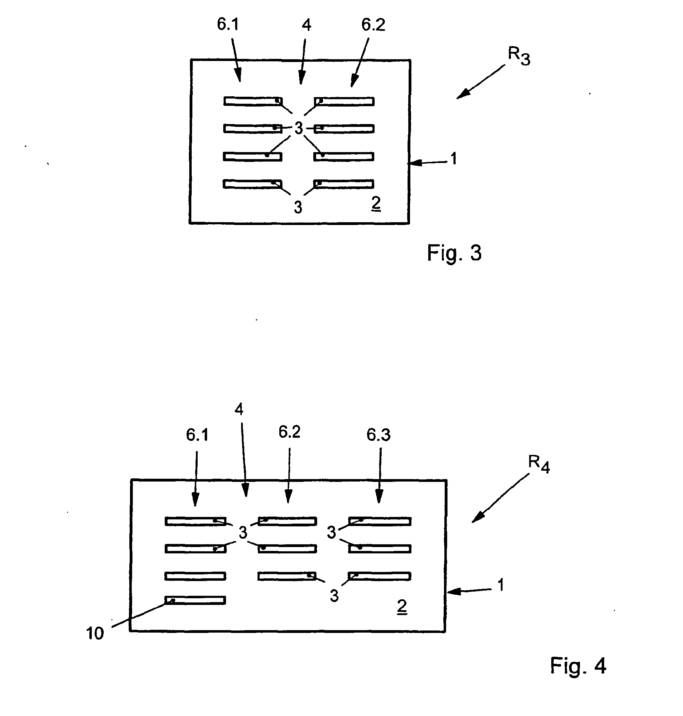

In Figur 3 ist ein Radarsensor R3 aufgezeigt, bei welchem zwei Anordnungen 6.1, 6.2 nebeneinander aus jeweils vier übereinander angeordneten Slot-Antennen 3 vorgesehen sind.

Gemäss Figur 4 ist ein Radarsensor R4 aufgezeigt, der aus drei nebeneinander angeordneten Anordnungen 6.1 bis 6.3 gebildet ist, die jeweils aus drei übereinander angeordneten Slot-Antennen 3 bestehen.

Im Rahmen der Erfindung soll jedoch liegen, dass insbesondere wenigstens zwei Anordnungen 6.1, 6.2 nebeneinander aus zumindest zwei Slot-Antennen 3 gebildet sind, wobei eine Mehrzahl von Anordnungen 6.1 bis 6.3 nebeneinander mit beliebig vielen Slot-Antennen 3 in der Grundfläche 2 gebildet sein können.

Wichtig ist ferner bei der vorliegenden Erfindung, dass in Abhängigkeit von einer wählbaren und vorgegebenen oder bestimmbaren Montagehöhe MH, wie es insbesondere in Figur 1b angedeutet ist, Einfluss genommen werden kann auf die Grösse des Erfassungsfeldes 5, in Abhängigkeit vom Abstrahlwinkel a.

Ferner wird über die Montagehöhe MH, die zumeist vorgegeben ist und über einen wählbaren und bestimmbaren Abstrahlwinkel a nach Anordnung der Slot-Antennen 3 in der Grundfläche 2 des Radarsensors R1 der Abstrahlwinkel a bestimmt, um das Erfassungsfeld 5 in einem gewünschten Abstand vom Sensor R1 in einem gewünschten Dynamikfeld D zu erzeugen.

Dabei kann beispielsweise bei der vorliegenden Erfindung bei einer vorgegebenen oder gewählten Montagehöhe MH Einfluss genommen werden, insbesondere über die Anordnung der Slot-Antenne 3, auf die Grösse des Erfassungsfeldes 5 sowie auf einen Abstand vom Sensor zum Erfassungsfeld 5.

Ferner kann dem Radarsensor R1 bis R4 zumindest ein hier in den Figuren 1a und 1b angedeuteter Präsenzsensor 7 zusätzlich zugeordnet sein, der in einer Seitenfläche 8 vorgesehen ist. Der Präsenzsensor 7 kann auch eigenständig als einzelnes Bauteil hergestellt sein. Vorzugsweise sind Seitenflächen 8 und Grundfläche 2 winklig, insbesondere rechtwinklig, zueinander ausgebildet, so dass über den Präsenzsensor 7 ein zusätzliches Erfassungsfeld 9 bzw. Präsenzfeld P detektierbar ist. Dieses zusätzliche Erfassungsfeld 9 dient beispielsweise dem Erkennen eines stationären Hindernisses, beispielsweise im Bewegungsbereich einer Türe oder eines Tores.

Ferner ist wichtig bei der vorliegenden Erfindung, dass beispielsweise zur Feineinstellung oder Feinjustierung, beispielsweise mittels einer Fernsteuerung, über die Phasenverschiebung der einzelnen reflektierenden Empfangssignale zwischen den Slot-Antennen 3 eine Feineinstellung bzw. eine Justierung des Abstrahlwinkels a möglich ist. Hierdurch kann mittels einer Fernbedienung die Grösse und der Abstand des Erfassungsfeldes 5 sehr leicht beeinflusst und verändert werden. Dies gewährleistet einen äusserst geringen Montageaufwand.

Insbesondere über eine Fernbedienung des Radarsensors R1 ist dieser sehr leicht parametrisierbar.

Beispielsweise ist denkbar, dass ein erster montierter Radarsensor parametrisiert wird und diese Parameter in der Fernbedienung abgelegt und abgespeichert werden, um dem nachfolgenden einzustellenden weiteren Radarsensoren diese Daten lediglich via der Fernbedienung zu übermitteln. Dies soll ebenfalls im Rahmen der vorliegenden Erfindung liegen.

Ferner soll im Rahmen der vorliegenden Erfindung liegen, wie es beispielsweise in Figur 4 angedeutet ist, dass jedem Radarsensor R1 bis R4 und/oder Präsenzsensor 7 zumindest eine Hilfsantenne 10 zugeordnet sein kann, die dem bestehenden Radarsensor Energie entzieht. Hierdurch lässt sich der Radarsensor R1 bis R4 und/oder der Präsenzsensor 7 durch den Energieentzug auf Betriebssicherheit testen. Insbesondere durch die Belastung des eigentlichen Feldes des Radarsensors R1 bis R4 und auch des Präsenzsensors 7 ist eine Testversorgung, die in gleichen oder anderen Frequenzen der Antenne, insbesondere Slot-Antenne 3, erfolgen kann, möglich. Die entsprechenden Signale können permanent das Testsignal generieren, so dass die Betriebssicherheit des Radarsensors bzw. Präsenzsensors 7 permanent überprüft werden kann. Die Hilfsantenne 10 kann autonom und eigenständig ausgebildet sein und permanent die Betriebssicherheit des Radarsensors R1 bis R4 und/oder auch des Präsenzsensors 7 überprüfen.

## Patentansprüche

1. Verfahren zum Betreiben eines Radarsensors (R1 bis R4) im Nahbereich zur Erzeugung eines detektierbaren Erfassungsfeldes (5) für die Erkennung von Personen und/oder stationären Objekten mit einer Antenne, wobei
- der Radarsensor (R4) aus einem Grundkörper (1), welcher eine äussere Grundfläche (2) aufweist, besteht;
- die Antenne (3) aus mehreren in der Grundfläche (2) angeordneten Antennen (3) zum Senden und Empfangen besteht;
- eine Hilfsantenne (10) zur Durchführung von Selbsttest vorgesehen ist, die als eine in der Grundfläche (2) separat und neben den Antennen (3) des Radsensors (R1 bis R4) angeordnete Hilfsantenne (10) ausgebildet ist;
- wobei die Hilfsantenne (10) dem Radarsensor zur Testversorgung Energie entzieht und damit das Erfassungsfeld (5) belastet, wodurch der Radarsensor auf Betriebssicherheit überprüft wird.

2. Verfahren nach Anspruch 1, **dadurch gekennzeichnet, dass** das Erfassungsfeld (5) elektronisch veränderbar oder justierbar ist.

3. Verfahren nach Anspruch 1 oder 2, **dadurch gekennzeichnet, dass** über eine Auswertung der Frequenz und Phase der einzelnen reflektierten Antennensignale eine Auswertung erfolgt.

4. Verfahren nach wenigstens einem der Ansprüche 1 bis 3, **dadurch gekennzeichnet, dass** über die Phasenverschiebung der Antennensignale ein Abstrahlwinkel (α) des Erfassungsfeldes (5) eingestellt, insbesondere fein eingestellt oder justiert wird, wobei der Radarsensor (R1 bis R4) senkrecht an einem beliebigen Untergrund, wie beispielsweise einer Wand oder einem Türrahmen, angeordnet wird.

5. Verfahren nach Anspruch 4, **dadurch gekennzeichnet, dass** über den Abstrahlwinkel (α) in der Abhängigkeit einer Montagehöhe (M_{H}) das Erfassungsfeld (5) flächenmässig und ortsabhängig eingestellt bzw. ausgerichtet wird, bzw. das Erfassungsfeld (5) wird nach unten geneigt ausgerichtet und wird ggf. durch Feinjustieren verändert.

6. Verfahren nach wenigstens einem der Ansprüche 1 bis 5, **dadurch gekennzeichnet, dass** der Radarsensor (R1 bis R4) mit einem Präsenzsensor (7) versehen wird.

7. Verfahren nach wenigstens einem der Ansprüche 1 bis 6, **dadurch gekennzeichnet, dass** durch den Energieentzug mittels der Hilfsantenne (10) bzw. durch die Belastung des eigentlichen Erfassungsfeldes (5, 9) des Radarsensors (R1 bis R4) und/oder des Präsenzsensors (7) in anderen oder gleichen Frequenzen auswertbare Signale ermittelt werden, die der Auswertung der Betriebssicherheit des Radarsensors (R1 bis R4) und/oder Präsenzsensors (7) dienen.

8. Verfahren nach wenigstens einem der Ansprüche 1 bis 7, **dadurch gekennzeichnet, dass** über eine mittels Fernbedienung einstellbare Phasenverschiebung bzw. Auswertung der Frequenz und Phase zwischen Ausgangs- und Eingangssignal ein Erfassungsfeld (9) bezüglich Richtung, Ort und Grösse bzw. Fläche beinflussbar ist.

9. Verfahren nach wenigstens einem der Ansprüche 6 bis 8, **dadurch gekennzeichnet, dass** mittels eines Präsenzsensors (7) mit einem FMCW-Radar für die Distanzmessung in einem Erfassungsfeld (9) stationäre Objekte durch Bestimmung von Phasenverschiebungen und Laufzeiten der reflektierten Signale nach Grösse und Ort lokalisierbar und bestimmbar sind.

10. Verfahren nach Anspruch 9, **dadurch gekennzeichnet, dass** durch die Bestimmung der Laufzeiten bzw. durch Auswertung von Frequenz und Phase der reflektierten Signale die Bestimmung der Grösse, der Lage sowie der Höhe des Feldes oder des stationären Objektes im Erfassungsfeld ermöglicht wird.

11. Verfahren nach Anspruch 9 oder 10, **dadurch gekennzeichnet, dass** eine Distanzmessung zum Objekt im stationären Erfassungsfeld (9) durch die unterschiedlichen bzw. sich ändernden Laufzeiten bzw. durch eine Auswertung von Frequenz und Phase der reflektierten Signale erfolgt.

12. Radarsensor zur Erzeugung eines detektierbaren Erfassungsfeldes (5, 9) für die Erkennung von Personen und/oder statischen Objekten im Nahbereich mit einer Antenne (3), wobei
- der Radarsensor (R1 bis R4) aus einem Grundkörper (1), welcher eine äussere Grundfläche (2) aufweist, besteht;
- die Antenne (3) aus mehreren, in der Grundfläche (2) angeordneten Antennen (3) zum Senden und Empfangen besteht;
- eine Hilfsantenne (10) zur Durchführung von Selbsttests vorgesehen ist, die als eine in der Grundfläche (2) separat und neben den Antennen (3) des Radarsensors (R1 bis R4) angeordnete Antenne (10) ausgebildet ist;
- der Radarsensor (R1 bis R4) so ausgebildet ist, um im Betrieb mittels der Hilfsantenne (10) dem Radarsensor zur Testversorgung Energie zu entziehen und damit das Erfassungsfeld (5) zu belasten, wodurch der Radarsensor auf Betriebssicherheit überprüft wird.

13. Radarsensor nach Anspruch 12, **dadurch gekennzeichnet, dass** die Antenne (3) als eine Mehrzahl von Endfire-Antennen, insbesondere Slot-Antennen (3) oder Patch-Antennen ausgebildet ist.

14. Radarsensor nach Anspruch 13 **dadurch gekennzeichnet, dass** eine Mehrzahl von Slot-Antennen (3) übereinander und/oder nebeneinander in einer Grundfläche (2) angeordnet ist.

15. Radarsensor nach Anspruch 14, **dadurch gekennzeichnet, dass** mehrere Slot-Antennen (3) nebeneinander und übereinander in der Grundfläche (2) angeordnet sind und über einen wählbaren bzw. veränderbaren Abstand (A) und/oder (B) der einzelnen Slot-Antennen (3) zueinander ein Abstrahlwinkel (a), ggf. auch durch phasenverschobenes Ansteuern der einzelnen Slot-Antennen (3) zueinander, veränderbar, einstellbar und/oder justierbar ist.

16. Radarsensor nach wenigstens einem der Ansprüche 12 bis 15, **dadurch gekennzeichnet, dass** durch eine unterschiedliche Ansteuerung von Anordnungen (4) der Slot-Antennen (3) bzw. der einzelnen Slot-Antennen (3) in der Grundfläche (2), ggf. in Abhängigkeit einer Montagehöhe (M_{H}) ein Ort und eine Grösse des Erfassungsfeldes (5), insbesondere Dynamikfeldes (D), bestimmbar und veränderbar ist.

17. Radarsensor nach wenigstens einem der Ansprüche 12 bis 16, **dadurch gekennzeichnet, dass** in einer Seitenfläche (8) ein zusätzlicher Präsenzsensor (7) als Radarsensor, insbesondere als FMCW-Radarsensor, vorgesehen ist.

18. Radarsensor nach Anspruch 17, **dadurch gekennzeichnet, dass** die Seitenfläche (8) rechtwinklig oder schräg abgewinkelt zur Grundfläche (2) ausgebildet ist.

19. Radarsensor nach Anspruch 17 oder 18, **dadurch gekennzeichnet, dass** die Hilfsantenne (10) als autonome, eigenständige Hilfsantenne (10) dem Radarsensor (R1 bis R4) und/oder dem Präsenzsensor (7) zur Überprüfung auf Betriebssicherheit zugeordnet und in gleichen oder anderen Frequenzen betreibbar ist.

20. Radarsensor nach wenigstens einem der Ansprüche 12 bis 19, **dadurch gekennzeichnet, dass** eine Elektronik im Bereich einer der Grundfläche (2) gegenüberliegenden Rückseite angeordnet ist.

21. Radarsensor nach wenigstens einem der Ansprüche 12 bis 20, **dadurch gekennzeichnet, dass** der stationäre Sensor als Präsenzsensor (7) im Radarsensor (R1 bis R4) eingesetzt ist.

22. Radarsensor nach wenigstens einem der Ansprüche 12 bis 21, **dadurch gekennzeichnet, dass** eine erste Anordnung (6.1) aus Slot-Antennen (3) aus wenigstens zwei übereinander angeordneten Slot-Antennen (3) und eine zweite Anordnung (6.2) von Slot-Antennen (3) ebenfalls aus zumindest zwei übereinander angerodneten Slot-Antennen (3) gebildet ist und die erste Anordnung (6.1) zur zweiten Anordnung (6.2) von Slot-Antennen (3) nebeneinander beabstandet sind.

23. Radarsensor nach Anspruch 22, **dadurch gekennzeichnet, dass** sich die Signale der ersten Anordnung (6.1) von Slot-Antennen (3) mit den Signalen der zweiten Anordnung (6.2) von Slot-Antennen (3) in reflektierenden Wellenfronten in zwei oder mehreren Ebenen überlagern.

24. Radarsensor nach wenigstens einem der Ansprüche 17 bis 23, **dadurch gekennzeichnet, dass** in einem Grundkörper (1) Elektronik, die Slot-Antennen (3) sowie zumindest ein Präsenzsensor (7) als Einheit zu einem Radarsensor zusammengefasst sind.

25. Radarsensor nach wenigstens einem der Ansprüche 12 bis 24, **dadurch gekennzeichnet, dass** der Antenne (3) zumindest ein Sender und ein Empfänger zugeordnet sind und durch Bestimmung unterschiedlicher Laufzeiten und/oder Phasenverschiebungen der Empfangssignale eine Grösse, eine Lage und/oder eine Höhe eines Objektes im vorgewählten Erfassungsfeldes (9) bestimmbar ist, wobei Sender und Empfänger zueinander lokal beabstandet sind.

26. Radarsensor nach Anspruch 25, **dadurch gekennzeichnet, dass** über entsprechende Winkel sowie über eine resultierende Phasenverschiebung zwischen Sender und Empfänger eine Bestimmung von Position und Ausleuchtung eines wählbaren Erfassungsfeldes (9) möglich ist.

27. Radarsensor nach Anspruch 25 oder 26, **dadurch gekennzeichnet, dass** mittels zumindest einem Sender und Empfänger eine Distanzmessung, Orts- und Höhenmessung zu einem beliebigen stationären Objekt im Erfassungsfeld (9) möglich ist.

28. Radarsensor nach einem der Ansprüche 25 bis 27, **dadurch gekennzeichnet, dass** eine Begrenzung des Erfassungfeldes (3) in Länge und Breite ggf. auch justierbar und einstellbar ist.

## Claims

1. Method of operating a radar sensor (R1 to R4) at close range to generate a detectable sensing field (5) for the detection of persons and/or stationary objects with an antenna, wherein
- the radar sensor (R1 to R4) comprises a basic body (1) that has an outer base (2);
- the antenna (3) comprises a plurality of transmitting and receiving antennae (3) that are disposed in the base (2);
- an auxiliary antenna (10) is provided for carrying out self testing and takes the form of an auxiliary antenna (10) that is disposed in the base (2) separately and alongside the antennae (3) of the radar sensor (R1 to R4);
- wherein the auxiliary antenna (10) withdraws energy from the radar sensor for the test supply and hence loads the sensing field (5), with the result that the radar sensor is checked for operational reliability.

2. Method according to claim 1, **characterized in that** the sensing field (5) is electronically variable or alignable.

3. Method according to claim 1 or 2, **characterized in that** an evaluation is effected by means of an evaluation of the frequency and phase of the individual reflected antenna signals.

4. Method according to at least one of claims 1 to 3, **characterized in that** by means of the phase displacement of the antenna signals an emission angle (α) of the sensing field (5) is adjusted, in particular finely adjusted or aligned, wherein the radar sensor (R1 to R4) is disposed vertically on any desired substrate, such as for example a wall or a door frame.

5. Method according to claim 4, **characterized in that** by means of the emission angle (α) as a function of an assembly height (M_{H}) the sensing field (5) is areally and location-dependently adjusted and/or aligned, and/or the sensing field (5) is aligned so as to slope downwards and is optionally varied by fine adjustment.

6. Method according to at least one of claims 1 to 5, **characterized in that** the radar sensor (R1 to R4) is provided with a presence sensor (7).

7. Method according to at least one of claims 1 to 6, **characterized in that** by virtue of the energy withdrawal by means of the auxiliary antenna (10) and/or by virtue of the loading of the actual sensing field (5, 9) of the radar sensor (R1 to R4) and/or of the presence sensor (7) at other or identical frequencies evaluable signals are determined, which are used to evaluate the operational reliability of the radar sensor (R1 to R4) and/or presence sensor (7).

8. Method according to at least one of claims 1 to 7, **characterized in that** by means of a remotely adjustable phase displacement and/or evaluation of the frequency and phase between output- and input signal a sensing field (9) may be influenced in terms of direction, location and size and/or area.

9. Method according to at least one of claims 6 to 8, **characterized in that** by means of a presence sensor (7) with FMCW radar for distance measurement in a sensing field (9) the size and location of stationary objects may be determined by determining phase displacements and propagation times of the reflected signals.

10. Method according to claim 9, **characterized in that** by virtue of the determination of the propagation times and/or by virtue of evaluation of frequency and phase of the reflected signals it becomes possible to determine the size, position and height of the field or of the stationary object in the sensing field.

11. Method according to claim 9 or 10, **characterized in that** measurement of the distance of the object in the stationary sensing field (9) is effected by means of the different and/or changing propagation times and/or by means of an evaluation of frequency and phase of the reflected signals.

12. Radar sensor for generating a detectable sensing field (5, 9) for the detection of persons and/or static objects at close range with an antenna (3), wherein
- the radar sensor (R1 to R4) comprises a basic body (1) that has an outer base (2);
- the antenna (3) comprises a plurality of transmitting and receiving antennae (3) that are disposed in the base (2);
- an auxiliary antenna (10) is provided for carrying out self testing and takes the form of an antenna (10) that is disposed in the base (2) separately and alongside the antennae (3) of the radar sensor (R1 to R4);
- the radar sensor (R1 to R4) is designed so as during operation by means of the auxiliary antenna (10) to withdraw energy from the radar sensor for the test supply and hence load the sensing field (5), with the result that the radar sensor is checked for operational reliability.

13. Radar sensor according to claim 12, **characterized in that** the antenna (3) takes the form of a plurality of endfire antennae, in particular slot antennae (3) or patch antennae.

14. Radar sensor according to claim 13, **characterized in that** a plurality of slot antennae (3) are disposed one above the other and/or side by side in a base (2).

15. Radar sensor according to claim 14, **characterized in that** a plurality of slot antenna (3) are disposed side by side and one above the other in the base (2) and by means of a selectable and/or variable distance (A) and/or (B) of the individual slot antennae (3) from one another, optionally also by means of phase-displaced activation of the individual slot antennae (3) relative to one another, an emission angle (α) is variable, adjustable and/or alignable.

16. Radar sensor according to at least one of claims 12 to 15, **characterized in that** by means of a different activation of arrangements (4) of the slot antennae (3) and/or of the individual slot antennae (3) in the base (2), optionally as a function of an assembly height (M_{H}) a location and size of the sensing field (5), in particular dynamic field (D), is determinable and variable.

17. Radar sensor according to at least one of claims 12 to 16, **characterized in that** in a lateral face (8) an additional presence sensor (7) is provided as a radar sensor, in particular as an FMCW radar sensor.

18. Radar sensor according to claim 17, **characterized in that** the lateral face (8) is designed to lie at right angles or at a slant angle relative to the base (2).

19. Radar sensor according to claim 17 or 18, **characterized in that** the auxiliary antenna (10) is associated as an autonomous, independent auxiliary antenna (10) with the radar sensor (R1 to R4) and/or the presence sensor (7) for the purpose of checking for operational reliability and is operable at identical or other frequencies.

20. Radar sensor according to at least one of claims 12 to 19, **characterized in that** an electronic device is disposed in the region of a rear side lying opposite the base (2).

21. Radar sensor according to at least one of claims 12 to 20, **characterized in that** the stationary sensor is inserted as a presence sensor (7) in the radar sensor (R1 to R4).

22. Radar sensor according to at least one of claims 12 to 21, **characterized in that** a first arrangement (6.1) of slot antennae (3) is formed by at least two slot antennae (3) disposed one above the other and a second arrangement (6.2) of slot antennae (3) is formed likewise by at least two slot antennae (3) disposed one above the other and the first arrangement (6.1) and the second arrangement (6.2) of slot antennae (3) are spaced apart side by side.

23. Radar sensor according to claim 22, **characterized in that** the signals of the first arrangement (6.1) of slot antennae (3) are superimposed on the signals of the second arrangement (6.2) of slot antennae (3) in reflecting wave fronts in two or more planes.

24. Radar sensor according to at least one of claims 17 to 23, **characterized in that** in a basic body (1) the electronic device, the slot antennae (3) as well as at least one presence sensor (7) are combined as a unit into a radar sensor.

25. Radar sensor according to at least one of claims 12 to 24, **characterized in that** with the antenna (3) at least one transmitter and one receiver are associated and by determining different propagation times and/or phase displacements of the receive signals a size, a position and/or a height of an object in the preselected sensing field (5) is determinable, wherein transmitter and receiver are locally spaced apart from one another.

26. Radar sensor according to claim 25, **characterized in that** by means of corresponding angles and by means of a resulting phase displacement between transmitter and receiver a determination of position and coverage of a selectable sensing field (9) is possible.

27. Radar sensor according to claim 25 or 26, **characterized in that** by means of at least one transmitter and receiver a measurement of the distance, location and height of any stationary object in the sensing field (9) is possible.

28. Radar sensor according to one of claims 25 to 27, **characterized in that** a delimitation of the sensing field (3) in length and breadth is optionally also alignable and adjustable.

## Revendications

1. Procédé de fonctionnement d'un radar (R1 à R4) à faible portée pour générer un champ de détection détectable (5) pour l'identification de personnes et/ou d'objets stationnaires avec une antenne,
- le radar (R1 à R4) consistant en un corps de base (1) présentant une face de base extérieure (2);
- l'antenne (3) se composant de plusieurs antennes (3), disposées dans la face de base (2), destinées à l'émission et la réception;
- une antenne auxiliaire (10) étant prévue pour effectuer un test automatique, laquelle est réalisée comme antenne auxiliaire (10) disposée, séparément et à côté des antennes (3) du radar (R1 à R4), dans la face de base (2);
- l'antenne auxiliaire (10) prélevant, pour l'alimentation de test, de l'énergie du radar et charge de celle-ci le champ de détection (5), d'où le radar est vérifié quant à la sécurité de fonctionnement.

2. Procédé selon la revendication 1, **caractérisé par le fait que** le champ de détection (5) peut être modifié ou ajusté électroniquement.

3. Procédé selon la revendication 1 ou 2, **caractérisé par le fait que** par une évaluation de la fréquence et de la phase des différents signaux d'antenne réfléchis a lieu une évaluation.

4. Procédé selon au moins l'une des revendications 1 à 3, **caractérisé par le fait que** par le déphasage des signaux d'antenne est réglé, en particulier réglé finement, une angle de rayonnement (α) du champ de détection (5), le radar (R1 à R4) étant disposé verticalement sur une base, telle que par exemple un mur ou un châssis de porte.

5. Procédé selon la revendication 4, **caractérisé par le fait que** par l'angle de rayonnement (α), en fonction de la hauteur de montage (M_{H}), le champ de détection (5) est réglé ou orienté en surface et en fonction de l'emplacement, ou le champ de détection (5) est orienté incliné vers le bas et est éventuellement modifié par réglage fin.

6. Procédé selon au moins l'une des revendications 1 à 5, **caractérisé par le fait que** le radar (R1 à R4) est pourvu d'un détecteur de présence (7).

7. Procédé selon au moins l'une des revendications 1 à 6, **caractérisé par le fait que** par le prélèvement d'énergie au moyen de l'antenne auxiliaire (10) ou par le chargement du champ de détection (5, 9) proprement dit du radar (R1 à R4) et/ou du détecteur de présence (7) sont déterminés des signaux pouvant être évalués dans d'autres ou les mêmes fréquences qui servent à l'évaluation de la sécurité de fonctionnement du radar (R1 à R4) et/ou du détecteur de présence (7).

8. Procédé selon au moins l'une des revendications 1 à 8, **caractérisé par le fait que** par un déphasage ou une évaluation, réglable par commande à distance, de la fréquence et de la phase entre le signal de sortie et le signal d'entrée peut être influencé un champ de détection (9) quant à la direction, l'emplacement et la grandeur ou surface.

9. Procédé selon au moins l'une des revendications 6 à 8, **caractérisé par le fait qu'**au moyen d'un détecteur de présence (7) avec un radar FMCW pour la mesure de distance dans un champ de détection (9) peuvent être localisés et déterminés selon la grandeur et l'emplacement des objets stationnaires par détermination des déphasages et des temps de propagation des signaux réfléchis.

10. Procédé selon la revendication 9, **caractérisé par le fait que** par la détermination des temps de propagation ou par l'évaluation de la fréquence et de la phase des signaux réfléchis est rendue possible la détermination de la grandeur, de la position ainsi que de la hauteur du champ ou de l'objet stationnaire dans le champ de détection.

11. Procède selon la revendication 9 ou 10, **caractérisé par le fait qu'**une mesure de distance par rapport à l'objet dans le champ de détection stationnaire (9) a lieu par les temps de propagation différents ou variables ou par une évaluation de la fréquence et de la phase des signaux réfléchis.

12. Radar pour générer un champ de détection détectable (5, 9) pour l'identification de personnes et/ou d'objets statiques à faible portée avec une antenne (3),
- le radar (R1 à R4) consistant en un corps de base (1) présentant une face de base extérieure (2);
- l'antenne (3) se composant de plusieurs antennes (3), disposées dans la face de base (2), destinées à l'émission et la réception;
- une antenne auxiliaire (10) étant prévue pour effectuer un test automatique, laquelle est réalisée comme antenne auxiliaire (10) disposée, séparément et à côté des antennes (3) du radar (R1 à R4), dans la face de base (2);
- le radar (R1 à R4) étant réalisé de manière à prélever en fonctionnement, à l'aide de l'antenne auxiliaire (10), pour l'alimentation de test, de l'énergie du radar et à charger de celle-ci le champ de détection (5), d'où le radar est vérifié quant à la sécurité de fonctionnement.

13. Radar selon la revendication 12, **caractérisé par le fait que** l'antenne (3) est réalisée sous forme d'une pluralité d'antennes à rayonnement longitudinal, en particulier d'antennes à fente (3) ou d'antennes planaires.

14. Radar selon la revendication 13, **caractérisé par le fait qu'**une pluralité d'antennes à fente (3) sont disposées l'une au-dessus et/ou à côté de l'autre dans une face de base (2).

15. Radar selon la revendication 14, **caractérisé par le fait qu'**une pluralité d'antennes à fente (3) sont disposées l'une à côté et au-dessus de l'autre dans une face de base (2) et que par une distance (A) et/ou (B) sélectionnable ou modifiable entre les différentes antennes à fente (3) peut être modifié, réglé et/ou ajusté un angle de rayonnement (α), éventuellement aussi par activation à déphasage entre elles des différentes antennes à fente (3).

16. Radar selon au moins l'une des revendications 12 à 15, **caractérisé par le fait que** par une activation différente d'aménagements (4) d'antennes à fente (3) ou d'antennes à fente individuelles (3) dans la face de base (2), éventuellement en fonction d'une hauteur de montage (M_{H}) peuvent être déterminés et modifiés un emplacement et une grandeur du champ de détection (5), en particulier du champ dynamique (D).

17. Radar selon au moins l'une des revendications 12 à 16, **caractérisé par le fait que** dans une face latérale (8) est prévu un détecteur de présence additionnel (7) sous forme de radar, en particulier de radar FMCW.

18. Radar selon la revendication 17, **caractérisé par le fait que** la face latérale (8) est réalisée à angle droit ou en oblique par rapport à la face de base (2).

19. Radar selon la revendication 17 ou 18, **caractérisé par le fait que** l'antenne auxiliaire (10) est associée sous forme d'antenne auxiliaire autonome (10) au radar (R1 à R4) et/ou au détecteur de présence (7) pour vérifier la sécurité de fonctionnement et peut fonctionner dans les mêmes ou d'autres fréquences.

20. Radar selon au moins l'une des revendications 12 à 19, **caractérisé par le fait qu'**une électronique est disposée à l'endroit d'une face arrière opposée à la face de base (2).

21. Radar selon au moins l'une des revendications 12 à 20, **caractérisé par le fait que** le détecteur stationnaire est utilisé comme détecteur de présence (7) dans le radar (R1 à R4).

22. Radar selon au moins l'une des revendications 12 à 21, **caractérisé par le fait qu'**un premier aménagement (6.1) d'antennes à fente (3) est formé d'au moins deux antennes à fente (3) disposées l'une au-dessus de l'autre et qu'un deuxième aménagement (6.2) d'antennes à fente (3) est également formé d'au moins deux antennes à fente (3) disposées l'une au-dessus de l'autre et que le premier aménagement (6.1) est juxtaposé à une distance par rapport au deuxième aménagement (6.2) d'antennes à fente (3).

23. Radar selon la revendication 22, **caractérisé par le fait que** les signaux du premier aménagement (6.1) d'antennes à fente (3) se superposent avec les signaux du deuxième aménagement (6.2) d'antennes à fente (3) dans des fronts d'onde réfléchissants dans deux ou plusieurs plans.

24. Radar selon au moins l'une des revendications 17 à 23, **caractérisé par le fait que** dans un corps de base (1) sont regroupés comme unité l'électronique, les antennes à fente (3) ainsi qu'au moins un détecteur de présence (7), pour former un radar.

25. Radar selon au moins l'une des revendications 12 à 24, **caractérisé par le fait qu'**à l'antenne (3) sont associés au moins un émetteur et un récepteur et que par la détermination de différents temps de propagation et/ou déphasages des signaux de réception peuvent être déterminés une grandeur, un emplacement et/ou une hauteur d'un objet dans le champ de détection prédéterminé (9), l'émetteur et le récepteur étant localement distants l'un de l'autre.

26. Radar selon la revendication 25, **caractérisé par le fait que** par des angles correspondants ainsi que par un déphasage en résultant entre l'émetteur et le récepteur est possible une détermination de la position et la couverture d'un champ de détection sélectionnable (9).

27. Radar selon la revendication 25 ou 26, **caractérisé par le fait qu'**au moyen d'au moins un émetteur et un récepteur est possible une mesure de distance, une mesure d'emplacement et de hauteur par rapport à un objet stationnaire dans le champ de détection (9).

28. Radar selon l'une des revendications 25 à 27, **caractérisé par le fait qu'**une limitation du champ de détection (3) est éventuellement aussi ajustable et réglable en longueur et en largeur.
